Europäisches Patentamt

European Patent Office

Office européen des brevets

(11) Veröffentlichungsnummer: **0 007 445**
**A1**

## (12) EUROPÄISCHE PATENTANMELDUNG

(21) Anmeldenummer: **79102120.7**

(22) Anmeldetag: **26.06.79**

(51) Int. Cl.³: **C 08 G 63/18**

(30) Priorität: **06.07.78 DE 2829624**

(43) Veröffentlichungstag der Anmeldung:
**06.02.80 Patentblatt 80/3**

(84) Benannte Vertragsstaaten:
**CH DE FR GB IT NL**

(71) Anmelder: **BASF Aktiengesellschaft**
**Carl-Bosch-Strasse 38**
**D-6700 Ludwigshafen(DE)**

(72) Erfinder: **Sterzel, Hans-Josef, Dr.-Chem.**
**Haardtstrasse 13**
**D-6701 Dannstadt-Schauernheim 1(DE)**

(72) Erfinder: **Schlichting, Karl, Dr.-Chem.**
**Virchowstrasse 12**
**D-6712 Bobenheim-Roxheim 2(DE)**

(72) Erfinder: **Pirzer, Hans, Dr.-Chem.**
**Wildstrasse 22**
**D-6710 Frankenthal(DE)**

(54) **Thermoplastische Mischpolyester und ihre Verwendung zur Herstellung von Formkörpern.**

(57) Thermoplastische Mischpolyester auf Basis von Butandiol-1,4 und Terephthalsäure, bei denen 10 bis 30 Mol% der Terephthalsäure ersetzt sind durch ein Gemisch aus Adipinsäure, Glutarsäure und Bernsteinsäure. Die Mischpolyester können zur Herstellung von Kunststoff-Formteilen durch Spritzguß oder Extrusion verwendet werden.

EP 0 007 445 A1

BASF Aktiengesellschaft                    O.Z. 0050/033264

Thermoplastische Mischpolyester und ihre Verwendung
zur Herstellung von Formkörpern

Die Erfindung betrifft thermoplastische Mischpolyester mit hoher Zähigkeit und Steifigkeit auf Basis von Butandiol-1,4 und Terephthalsäure, bei denen ein Teil der Säurekomponente durch ein Gemisch von aliphatischen Dicarbonsäuren ersetzt ist.

Es ist bekannt, daß durch den Ersatz von Terephthalsäure durch langkettige aliphatische Dicarbonsäuren Polybutylenterephthalat so modifiziert werden kann, daß die Zähigkeit stark erhöht wird. Diese Zunahme an Zähigkeit muß mit einem Abfall der Steifigkeit und der Festigkeit erkauft werden.

So wird zum Beispiel Polybuylenterephthalat dadurch modifiziert, daß man einen Teil der Terephthalsäure durch Azelain- oder Sebazinsäure ersetzt. Derartige Mischpolyester eignen sich gut als Spritzgußformmassen zur Herstellung von Verschlüssen, Verschlußbändern und federnden Teilen. Im Extrusionssektor werden sie zu Schläuchen verarbeitet, die unempfindlich gegen Alkohol, Mineralöle oder Bremsflüssigkeiten sind. In vielen Anwendungsfällen wird neben der hohen Zähigkeit und Elastizität auch eine gute Steifigkeit, d.h. ein hoher E-Modul gefordert, so daß das Material bei kleinen Wandstärken höhere Kräfte aufnehmen kann, ohne sich unzulässig zu verformen.

Aufgabe der Erfindung war es also, Mischpolyester zu entwickeln, die sich neben hoher Zähigkeit und Elastizität auch durch eine höhere Steifigkeit als Mischpolyester nach dem Stand der Technik auszeichnen.

Diese Aufgabe wird erfindungsgemäß dadurch gelöst, daß man bei Polybutylenterephthalat 10 bis 30 Mol-% der Terephthalsäure durch ein Gemisch aus Adipinsäure, Glutarsäure und Bernsteinsäure ersetzt.

Das Gemisch der aliphatischen Dicarbonsäuren besteht zu
20 bis 80 Mol % aus Adipinsäure,
10 bis 60 Mol % aus Glutarsäure und
10 bis 40 Mol % aus Bernsteinsäure.

Bevorzugt verwendet man ein Gemisch aus etwa
23 bis 33 Mol % Bernsteinsäure,
22 bis 32 Mol % Adipinsäure und
35 bis 55 Mol % Glutarsäure,
welches bei der technischen Herstellung von Adipinsäure durch Oxidation von Cyclohexan als Nebenprodukt anfällt. Die thermoplastischen Mischpolyester weisen vorzugsweise eine relative Lösungsviskosität von 1,50 bis 1,80 gemessen an einer o,5%igen Lösung in einem Lösungsmittelgemisch aus Phenol/o-Dichlorbenzol im Gewichtsverhältnis 3 : 2 bei 25°C auf.

Es war überraschend, daß bei Verwendung der kurzkettigen aliphatischen Dicarbonsäuren die notwendig hohen Schlagzähigkeiten erhalten werden. Nach allgemeiner Lehre wird die Schlagzähigkeit von Mischpolyestern vor allem dann erhöht, wenn die Methylenkette der aliphatischen Dicarbonsäure besonders lang ist.

Die Herstellung der Mischpolyester erfolgt wie bekannt durch Polykondensation von Butandiol-1,4, Terephthalsäure und dem Dicarbonsäuregemisch bzw. deren Ester. Die erfindungsgemäßen Mischpolyester können die üblichen verstärkend wirkenden Füllstoffe wie Glasfasern, Kaolin, Talkum oder Kreide sowie außerdem Flammschutzmittel und Stabilisatoren nach dem Stand der Technik enthalten. Die Mischpolyester lassen sich mit den vom Polybutylenterephthalat her bekannten kurzen Zykluszeiten zu Formteilen mit hoher Zähigkeit, gutem Rückstellvermögen und hoher Festigkeit verarbeiten. Es hat sich gezeigt, daß dabei mit Vorteil auch Mischungen aus unmodifiziertem Polybutylenterephthalat mit den erfindungsgemäßen Mischpolyestern eingesetzt werden können. Sie können auch zu Profilen oder Folien extrudiert werden.

Die folgenden Beispiele zeigen einen erfindungsgemäßen Copolyester im Vergleich mit einem Copolyester nach dem Stand der Technik.

Beispiele

Die Mischpolyester wurden folgendermaßen hergestellt:

a) 101 kg Butandiol-1.4, 120 kg Dimethylterephthalat sowie 20,6 kg (17 Mol-%, bezogen auf Dimethylterephthalt) eines Gemisches aus 28 Mol % Bernsteinsäuredimethylester, 27 Mol-% Adipinsäuredimethylester und 45 Mol-% Glutarsäuredimethylester, wurden auf 130°C im Stickstoffstrom in einem Rührautoklaven erhitzt. Bei dieser Temperatur wurde 0,1 Gew.-% Tetrabutylorthotitanat, bezogen auf die Gewichtsmenge an eingesetzten Dimethylestern zugegeben.

Nach kurzer Zeit begann die Umesterungsreaktion unter Methanolabspaltung. Innerhalb von 2 Stunden wurde die Temperatur auf 220°C erhöht und dabei 97 % der theore- tischen Methanolmenge abgespalten. Dem Umesterungsprodukt wurden sodann 0,2 Gew.% Triphenylphosphit, ebenfalls bezogen auf die Gewichtsmenge an eingesetzten Dimethylestern zugegeben. Danach wurde innerhalb von 1 h der Druck auf ca. 0,5 Torr erniedrigt und die Schmelztemperatur auf 245°C erhöht. Nach weiteren 2 Stunden der Polykondensation unter diesen Bedingungen wurde die Schmelze unter Stickstoffdruck durch Düsen aus dem Autoklav ausgedrückt. Die Stränge wurden durch ein Wasserbad geführt und granuliert.

b) Auf die gleiche Weise wurde nach dem Stand der Technik ein Mischpolyester aus Butandiol-1,4, Terephthalsäure und 29,2 kg Sebazinsäure hergestellt.

Nach dem Trocknen der Granulate auf Wassergehalte um ca. 0,02 % wurden mit einer Spritzgußmaschine die Formkörper zur Messung der mechanischen Eigenschaften hergestellt. Dabei betrug die Schmelzetemperatur 250°C und die Formtemperatur 50°C.

Die Ergebnisse sind in der folgenden Aufstellung zusammengestellt. Die relative Viskosität der Mischpolyester wurde gemessen an 0,5 %igen Lösungen in einem Lösungsmittelgemisch aus Phenol/o-Dichlorbenzol im Gewichtsverhältnis 3 : 2 bei 25°C. Die Lochkerbschlagzähigkeit wurde in Anlehnung an den Schlagbiegeversuch nach DIN 53 453 gemessen. Dazu wurden die verwendeten Normkleinstäbe mit einer Bohrung von 3 mm Durchmesser in der Mitte der 6 x 50 mm-Fläche versehen. Die zum Brechen der 6 x 50 mm-Fläche notwendige Arbeit wird mit einem Pendelschlagwerk gemessen.

0007445

| | a) Erfindungsgemäßer Copolyester | b) Copolyester nach dem Stand der Technik |
|---|---|---|
| Modifizierungs-komponente | 17 Mol-% Dicarbon-säuregemisch | 17 Mol-% Sebazin-säure |
| Relative Viskosität | 1,685 | 1,69 |
| Lochkerbschlag-zähigkeit | | |
| bei + 23 °C | 81 kJ/m$^2$ | 74 kJ/m$^2$ |
| 0 °C | 60 kJ/m$^2$ | 62 kJ/m$^2$ |
| − 20 °C | 48 kJ/m$^2$ | 45 kJ/m$^2$ |
| Zugversuch nach DIN 53 455: | | |
| Streckspannung | 33,3 N/mm$^2$ | 27,4 N/mm$^2$ |
| Reißfestigkeit | 42,8 N/mm$^2$ | 35,1 N/mm$^2$ |
| Reißdehnung | 370 % | 430 % |
| Zug-E-Modul nach DIN 53 457 | 1020 N/mm$^2$ | 560 N/mm$^2$ |

0007445

Beispiel 2

a) 70 kg des Mischpolyesters nach Beispiel 1 a) wurden mit 30 kg Talkum bei 260 bis 280°C auf einem Zweiwellenextruder konfektioniert und granuliert.

b) Wie in Beispiel 2 a) wurde eine Mischung aus 35 kg des Mischpolyesters, 35 kg Polybutylenterephthalat (K-Wert 68) und 30 kg Talkum hergestellt.

Tabelle 2 zeigt die Produkteigenschaften:

| Mischung nach | Beispiel 2 a) | Beispiel 2 b) |
|---|---|---|
| Reißfestigkeit in $[N.mm^{-2}]$, DIN 53 455 | 32 | 47 |
| Bruchzähigkeit in $[N.m]$, DIN 53 443 | 15 | 13 |
| Zug-E-Modul $[N.mm^{-2}]$, DIN 53 457 | 2 250 | 6 000 |

BASF Aktiengesellschaft      -1-      O.Z. 0050/033264

Patentansprüche

1. Thermoplastische Mischpolyester auf der Basis von Butandiol-1,4 und Terephthalsäure, dadurch gekennzeichnet, daß 10 bis 30 Mol% der Terephthalsäure ersetzt sind durch ein Gemisch aus
   20 bis 80 Mol% Adipinsäure
   10 bis 60 Mol% Glutarsäure und
   10 bis 40 Mol% Bernsteinsäure,
   wobei sich die Prozentzahlen auf 100 addieren.

2. Thermoplastische Mischpolyester nach Anspruch 1, gekennzeichnet durch folgende Zusammensetzung des Dicarbonsäuregemisches:
   22 bis 32 Mol% Adipinsäure,
   23 bis 33 Mol% Bernsteinsäure und
   35 bis 55 Mol% Glutarsäure

3. Verwendung der thermoplastischen Mischpolyester nach Anspruch 1 zur Herstellung von Formteilen durch Spritzguß oder Extrusion.

**Europäisches Patentamt**

# EUROPÄISCHER RECHERCHENBERICHT

Nummer der Anmeldung

EP 79 102 120.7

| | EINSCHLÄGIGE DOKUMENTE | | | KLASSIFIKATION DER ANMELDUNG (Int.Cl.) |
|---|---|---|---|---|
| Kategorie | Kennzeichnung des Dokuments mit Angabe, soweit erforderlich, der maßgeblichen Teile | | betrifft Anspruch | |
| A | DE - B2 - 2 336 026 (BASF) <br> * Spalte 5, Zeilen 59 bis 65; <br> Spalte 6, Zeile 19 bis Spalte 7, <br> Zeile 9 * <br><br> -- | | | C 08 G 63/18 |
| A | DE - A - 1 520 284 (MONSANTO) <br> * Beispiel 3, Seite 13, Zeile 13 * <br><br> -- | | | **RECHERCHIERTE SACHGEBIETE (Int. Cl.)** |
| A | GB - A - 1 475 541 (IMPERIAL CHEMICAL INDUSTRIES) <br> * Seite 2, Zeilen 86 bis 96; <br> Seite 1, Zeilen 22 bis 27 * <br><br> ---- | | | C 08 G 63/00 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| Berlin | 24-10-1979 | KRAIL |

EPA form 1503.1 06.78